# EUROPÄISCHE PATENTSCHRIFT

(11) **EP 1 880 646 B1**
(45) Veröffentlichungstag und Bekanntmachung des Hinweises auf die Patenterteilung: **14.04.2010**
(21) Anmeldenummer: 07112413.5
(22) Anmeldetag: 13.07.2007
(51) Int. Cl.: A47J 37/04, H05B 6/80

(54) **Speisenausgabeanlage und Verfahren zur Ausgabe von angerichteten Speisen**
Device for providing food and method for providing prepared food
Dispositif de distribution de nourriture et méthode de distribution de nourriture préparée

(30) Priorität: 21.07.2006 CH 11892006
(43) Veröffentlichungstag der Anmeldung: 23.01.2008
(73) Patentinhaber: Schmalz Distributions-Systeme AG, 2560 Nidau (CH)
(72) Erfinder: Schmalz, Beat, 2560, Nidau (CH)
(74) Vertreter: Scheuzger, Beat Otto

(56) Entgegenhaltungen:
- WO-A-98/05184
- GB-A- 1 167 925
- JP-A- 1 198 512
- JP-A- 3 192 684
- US-A- 6 147 336

## Beschreibung

Die Erfindung betrifft eine Speisenausgabeanlage mit einem endlosen Förderband, die unter der durch das endlose Förderband gebildeten Ebene mit mindestens einer Induktionsspule für die Energieübertragung zu mindestens einem einen Induktionskern umfassenden Tablett, Geschirrelement oder Warmhalteunterteil für Geschirrelemente versehen ist. Die Erfindung betrifft auch ein Verfahren zur Ausgabe von angerichteten Speisen.

### Stand der Technik

Speisenausgabeanlagen dieser Art sind bekannt und z.B. in JP 01198512 A beschrieben. Im Allgemeinen sind Ausgabegeräte ein- oder doppelseitig zu einem Förderband angeordnet. Am Anfang des Förderbandes befinden sich ein Tablettspender, ein Geschirrspender und ein Besteckspender. In Laufrichtung des Förderbandes folgen dann Speisenausgabewagen mit den verschiedenen Speisen. Ausgabepersonen stehen an den Speisenausgabewagen, um die Speisen in den auf den vorbeilaufenden Tabletts angeordneten Geschirrelementen zu platzieren.

Um das Abkühlen der Speisen zu verlangsamen, sind zum Beispiel in US 3 148 676 oder US 4 246 884 Wärmespeicherschüsseln vorgeschlagen worden. Diese Wärmespeicherschüsseln werden in einem Ofen erwärmt, auf die Tabletts gelegen und die Geschirrelemente, die eine warme Speise enthalten sollen, werden dann in diesen Wärmespeicherschüsseln platziert und anschliessend mit der warmen Speise gefüllt.

Ein Nachteil dieses Systems besteht darin, dass das Bedienpersonal sich brennen oder verletzten kann, wenn es die Wärmespeicherschüssel aus dem Ofen holt und auf die Tabletts legt.

Es ist auch ein Nachteil, dass sich die Wärmespeicherschüsseln auf dem Weg zwischen dem Ofen und dem Ort, an dem sie von der jeweiligen Ausgabeperson gefüllt werden, abkühlen. Dadurch wird ebenfalls Wärmeenergie verschwendet.

Es ist zudem ein Nachteil, dass die erwärmten Wärmespeicherschüsseln von einer Person manuell geholt und auf die Tabletts gelegt werden müssen.

Der Erfindung liegt die Aufgabe zugrunde, die genannten Nachteile zu überwinden und eine Speisenausgabeanlage zu schaffen, mit der die warmen Speisen einfach und lange warm gehalten werden können.

### Offenbarung der Erfindung

Diese Aufgabe wird erfindungsgemäss dadurch gelöst, dass die Speisenausgabeanlage mit Mitteln zur Messung der Temperatur des einen Induktionskern umfassenden Geschirrelements oder Warmhalteunterteils für Geschirrelemente ausgerüstet ist.

Mit den Mitteln zur Messung der Temperatur des einen Induktionskern umfassenden Geschirrelements oder Warmhalteunterteils für Geschirrelemente wird erreicht, dass keine übermässige Erwärmung auftreten kann.

Nach einer weiteren Ausführungsform der Erfindung ist die Speisenausgabeanlage mit Mitteln zur Ermittlung der Anwesenheit eines Geschirrelements, Warmhalteunterteils für Geschirrelemente oder Tabletts über der Induktionsspule ausgerüstet.

Nach noch einer weiteren Ausführungsform der Erfindung ist die Speisenausgabeanlage mit einer Steuereinheit zur Steuerung der Stromversorgung der Induktionsspule ausgerüstet.

Die erfindungsgemässe Speisenausgabeanlage hat namentlich den Vorteil, dass sie problemlos aus bereits bestehenden Anlagen hergestellt werden kann, in dem man lediglich die Induktionsspulen unter dem Förderband anordnet. Das eventuelle Zubehör (Sensoren, Steuereinheit, usw.) kann gegebenenfalls auch einfach angebracht werden.

Gegenstand der Erfindung ist auch ein Verfahren gemäß Anspruch 4 zur Ausgabe von angerichteten Speisen, bei dem mindestens eines der Geschirrelemente einen Induktionskern umfasst oder über dem Induktionskern eines einen Induktionskern umfassenden Tabletts oder Warmhalteunterteils für Geschirrelemente liegt, wobei mindestens eine Induktionsspule, welche sich unter der durch das endlose Förderband gebildeten Ebene befindet, mit Strom versorgt wird.

Nach einer Ausführungsart des erfindungsgemässen Verfahrens wird die Induktionsspule kontinuierlich mit Strom versorgt.

Nach einer weiteren Ausführungsart des erfindungsgemässen Verfahrens wird die Induktionsspule diskontinuierlich mit Strom versorgt.

Nach einer weiteren Ausführungsart des erfindungsgemässen Verfahrens wird die Induktionsspule nur dann mit Strom versorgt, wenn sie ein Signal von einer Steuereinheit empfängt.

Nach einer weiteren Ausführungsart des erfindungsgemässen Verfahrens wertet die Steuereinheit Signale von Mitteln zur Ermittlung der Anwesenheit eines Geschirrelements, Warmhalteunterteils für Geschirrelemente oder Tabletts über der Induktionsspule aus.

### Kurze Beschreibung der Zeichnungen

Im Folgenden werden Ausführungsformen der Erfindung unter Bezugnahme auf die begleiteten Zeichnungen beschrieben. Es zeigen:
Figur 1 eine schematische perspektive Ansicht der erfindungsgemässen Speisenausgabeanlage und
Figur 2 einen Querschnitt eines mit der erfindungsgemässen Speisenausgabeanlage anwendbaren Warmhalteunterteils mit einem entsprechenden Warmhalteoberteil.

### Ausführliche Beschreibung der Erfindung

### Erfindungsgemässe Speisenausgabeanlage

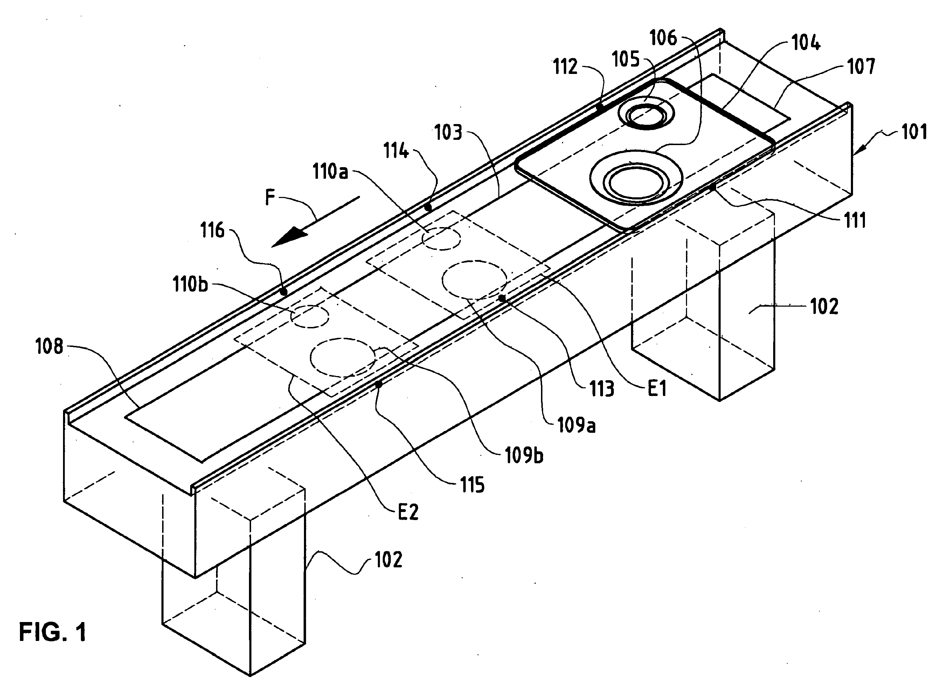

Die erfindungsgemässe Speisenausgabeanlage wird in Fig. 1 dargestellt. Sie umfasst im Wesentlichen ein Untergestell 101, das auf zwei Trägern 102 abgestützt ist, ein endloses Förderband 103, das ein breites Gurtband oder ein aus zwei Rundriemen bestehendes Förderband ist, und (nicht dargestellte) Mittel z.B. ein Motor, zum Bewegen des Föderbandes 103 in der durch den Pfeil F angezeigten Richtung.

In Figur 1 ist zudem ein normales Tablett 104 gezeigt, welches sich am Anfang 107 des Förderbandes 103 befindet und beispielsweise eine Schale 105 und ein Warmhalteunterteil 106 für einen Teller trägt.

Die Schale 105 umfasst einen Indukstionskern. Geschirrelemente wie Teller, Schale, u.s.w. mit einem Induktionskern sind zum Beispiel aus US 4 086 907 und CH 475 746 bekannt. Der Indukstionskern besteht aus einer Metallschicht, insbesondere aus Aluminium.

Gegebenenfalls kann das mit einem Induktionskern versehene Geschirrelement 105 auch in einem Warmhalteunterteil enthalten sein. Vorzugsweise ist das Geschirrelement in einem Warmhalteunterteil, das keinen Induktionskern enthält, wie zum Beispiel in US 3 148 676 und US 4 246 884 beschrieben. Damit ist das Geschirrelement 105 vom Tablett 104 wärmeisoliert.

In einer Variante wird ein spezielles Tablett 104 eingesetzt, welches mit einem im Tablett eingebetteten Induktionskern, z. B. einer Metallplatte, versehen ist. Ein solches Tablett ist zum Beispiel in US 4 182 405 mit Bezug auf Fig. 1 beschrieben. Wenn ein solches spezielles Tablett verwendet wird, können die Schale und der Teller unmittelbar auf diesem Tablett liegen. Mit anderen Worten ist dann kein Warmhalteunterteil notwendig, denn das Tablett kann selbst die Geschirrelemente warm halten.

Zwischen dem Anfang 107 und dem Ende 108 des Förderbandes 103 ist mindestens eine, und im Allgemeinen mehrere Induktionsspulen 109a, 109b, 110a, 110b vorgesehen. Diese Induktionsspulen 109a, 109b, 110a, 110b sind übliche Induktionsspulen, sie haben eine bekannte Form (d.h. rund oder viereckig) und sie liegen unter der durch das Förderband 103 gebildeten Ebene, entweder völlig unter dem Förderband 103 oder teilweise unter dem Föderband 103 (wie in Fig. 1), weil das Tablett 104 im Allgemeinen breiter als das Förderband 103 ist und das Geschirrelement 105 sowie das Warmhalteunterteil 106 dann nicht oder nicht völlig über dem Förderband 103 liegen können.

Vorzugsweise bilden die Indukstionsspulen Gruppen (109a, 109b), (110a, 110b), etc., wobei die Induktionsspulen einer selben Gruppe in einer zur Bewegungsrichtung F des Förderbands 103 parallelen Linie ausgerichtet sind. Auf diese Weise wird erreicht, das alle Induktionsspulen einer Gruppe dem selben Geschirrelement zugeordnet sind.

Jede Indukstionsspule einer Gruppe bildet mit einer benachbarten Induktionsspule einer anderen Gruppe eine Erwärmungszone :
Erwärmungszone E1 : 109a, 110a
Erwärmungszone E2 : 109b, 110b

Sämtliche Erwärmungszonen E1,E2,... können einfach als Modul oder Strecke in einer bereits bestehenden Anlage eingebaut werden.

In einer bevorzugten Ausführungsform der Erfindung sind am Anfang 107 des Förderbandes 103 Mittel, beispielsweise Temperatursensoren, Infrarotsensoren oder Infrarotdetektoren 111, 112 zur Messung der Temperaturen des Geschirrelements 105 und des Warmhalteunterteils 106 vorgesehen.

In einer weiteren bevorzugten Ausführungsform der Erfindung sind in den Ewärmungszonen E1, E2 Mittel 113, 114, 115, 116 zur Ermittlung der Anwesenheit des Geschirrelements 105, des Warmhalteunterteils 106 oder des Tabletts 104 über einer Induktionspule, respek. 109a, 110a, 109b, 110b, vorgesehen.

In noch einer weiteren bevorzugten Ausführungsform der Erfindung ist eine (nicht dargestellten) Steuereinheit vorgesehen, welche die Stromversorgung der Induktionsspulen steuert. Die Funktionsweise dieser Steuereinheit wird nachstehend mit Bezug auf das erfindungsgemässe Verfahren erläutert.

### Warmhalteunterteil 106

Als Warmhalteunterteil 106 für Geschirrelemente kann das Unterteil eines Behälters, der Gegenstand von EP-A-666 047 ist, eingesetzt werden.

Vorzugsweise wir ein Warmhalteunterteil mit einer der Geschirrelement-Unterseite angepassten Vertiefung zur Aufnahme des Geschirrelements verwendet, wobei das Warmhalteunterteil einen in einer Isolation eingebetteten Induktionskern zur Aufnahme von mittels eines Induktionsheizgeräts induktiv übertragbarer Wärmeenergie umfasst.

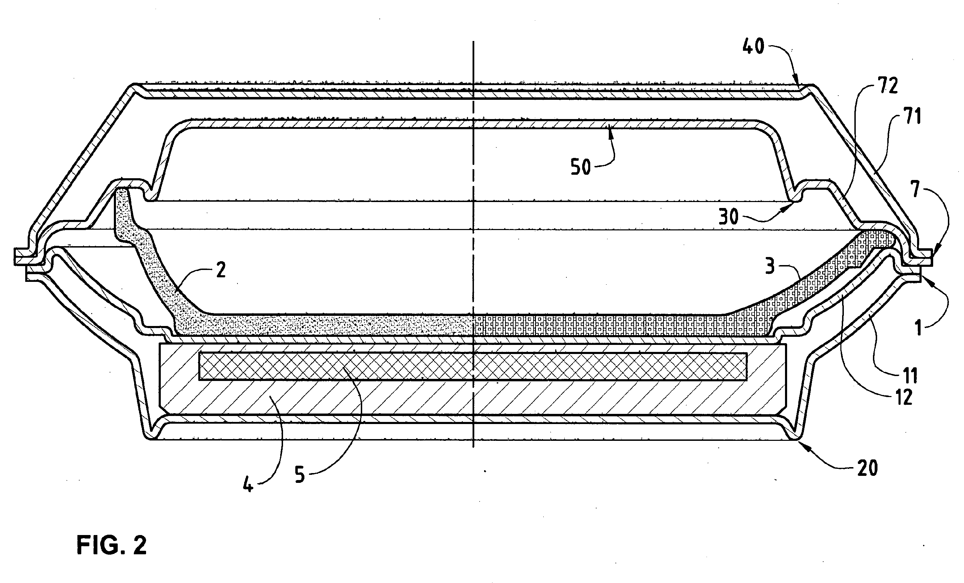

Ein Beispiel eines solchen Warmhalteunterteils ist im Querschitt in Figur 2 dargestellt. Das Bezugszeichen 1 bezieht sich auf das Warmhalteunterteil. Dieses Warmhalteunterteil 1 besteht aus einer äusseren Halbschale 11 und aus einer inneren Halbschale 12. Die äussere Halbschale 11 und die innere Halbschale 12 können aus linearem Polyphenylensulfid (PPS), Polybutylenterphtalat (PBTP), Polycarbonatterphtalat (PCT), flüssig kristallinen Kunststoffen (LCP) oder Polyphenylenoxid/Polyamid 6 /6.6.-Blend (PPO/PA) - alle Werkstoffe werden zwecks Wärmeformbeständigkeit mit 30% Kurzglasfasern verstäkt - mit einer Dicke von beispielsweise 2 mm hergestellt sein. Zwischen der äusseren Halbschale 11 und der inneren Halbschale 12 besteht ein füllbarer Zwischenraum. Der Zwischenraum kann mit Isolationsmaterial wie beispielsweise PU-Schaum (Polyurethanschaum) gefüllt sein. Entscheidend für eine optimale thermische Isolation, ist das Raumgewicht, das bei 50 bis 80 kg/m³ liegen sollte.

In Figur 2 bezieht sich das Bezugszeichen 2 auf einen Suppenteller oder eine Eintopf-Schale, und das Bezugszeichen 3 bezieht sich auf einen Speiseteller. Es kann entweder der Suppenteller 2 oder der Speiseteller 3 in einer der Tellerunterseite angepassten Vertiefung des Warmhalteunterteils angebracht sein. Im Suppenteller 2 oder im Speiseteller 3 können warme Speisen angerichtet sein, welche warm gehalten werden sollen.

In Figur 2 bezieht sich das Bezugszeichen 4 auf eine Isolation zur Einbettung eines Induktionskerns 5. Diese Isolation weist vorzugsweise gegenüber der Bodenseite des Warmhalteunterteils eine geringere Wärmeleitfähigkeit auf, als gegenüber der Tellerseite des Warmhalteunterteils.

Auf der Tellerseite des Warmhalteunterteils besteht die Isolation beispielsweise aus einer 2 mm dicken Rondelle aus Hochtemperaturisolationswerkstoffen mit einer Wärmeleitfähigkeit von 0.03 W/mK. Auf der Bodenseite des Warmhalteunterteils besteht die Isolation beispielsweise aus einer 10 mm dicken Rondelle aus Hochtemperaturisolationswerkstoff mit einer Wärmeleitfähigkeit von 0.03 W/mK. Stirnseitig ist der Induktionskern 5 beispielsweise lediglich mit Haltenocken so distanziert, dass keine vollflächige Berührung des heissen Wärmekerns mit dem Kunststoff erfolgt, sodass beispielsweise gegenüber der äusseren Halbschale 11 ringsum ein Luftspalt von 1-2 mm besteht. Alternativ können als stirnseitige Isolation beispielsweise zwei Ringe aus Keramikfaserpapier angebracht sein.

Der Induktionskern 5 besteht im Allgemeinen aus Metall und vorzugsweise aus mindestens zwei Materialen. Er kann beispielsweise aus einem Aluminiumkern mit einer Dicke von 1-15 mm bestehen, auf welchem einseitig oder beidseitig ein 0.5 - 2 mm mm dickes Chromstahl-Blech der Werkstoff-Nr. 1.4016 angebracht ist.

Der Induktionskern umfasst vorzugsweise ein Material mit einem bestimmbaren Curie-Punkt.

Die erwähnten Materialien und weitere verwendbare Materialien haben folgende Materialeigenschaften:
PPO/PP-Blend Tₘₐₓ +125° C, Wärmeleitfähigkeit 0.4 W/mK
PPO/PA-Blend Tₘₐₓ +220° C, Wärmeleitfähigkeit 0.4 W/mK
PPS Tₘₐₓ +240° C, Wärmeleitfähigkeit 0.3 W/mK
HT-Isolation Tₘₐₓ +1425° C, Wärmeleitfähigkeit 0.03 W/mK, RG 192 kg/m³
PU-Schaum Tₘₐₓ +140° C, Wärmeleitfähigkeit 0.03 W/mK, RG 60 gr/cm³

Auch Kunststoffe wie z.B. PBTP, PCT, LCP oder PPS mit einer erhöhten thermischen Beständigkeit sind für die Herstellung des Warmhalteunterteils bzw. Warmhalteoberteils denkbar.

Der Induktionskern kann mittels einer Induktionsheizvorrichtung auf eine bestimmbare Temperatur erwärmt. Eine solche Erwärmung kann mittels einer Induktionsvorrichtung, welche eine Leistung von beispielsweise 5-15 kW aufweist, innerhalb von 10 bis 15 Sekunden erfolgen. Die erzielbare Temperatur des Induktionskerns beträgt beispielsweise 150° - 250° C. Die Erwärmung des Induktionskerns führt somit zu keinerlei Verzögerung beim Anrichten von Speisen. Die Erwärmung des Induktionskerns führt zudem nur zu einem minimalen Energiemehrverbrauch.

Durch die geeignete Wahl von Isolationsmaterialien kann die in den Induktionskern eingebrachte Wärmeenergie nicht unkontrolliert entweichen und zu einer unkontrollierten Erwärmung des Tellers und somit einem Verbrennen von Speisen auf dem Teller oder zu einer unkontrollierten Erwärmung der Unterseite des Warmhalteunterteils und somit zu einer Verletzungsgefahr für Personen, die mit einem erwärmten Warmhalteunterteil hantieren, führen. Bei der kontrollierten Abgabe der im Induktionskern eingebrachten Wärmeenergie spielt insbesondere auch das Warmhalteoberteil sowie die verwendeten Geometrien eine Rolle. Experimente habe gezeigt, dass mittels einer in Figur 2 gezeigten relativen Geometrie eines Warmhalteunterteils eine Warmhaltung von auf einem Teller angerichteten Speisen derart ermöglicht wird, dass die Temperatur nie über 85° C steigt, und dass die Temperatur auch nach 90 Minuten noch mehr als 65° C beträgt.

Der Teller, auf dem die Speisen angeordnet sind, kann zudem so ausgestaltet sein, dass der Teller auf der Tellerunterseite nur auf einem schmalen Ring, welcher im Wesentlichen die gesamte Tellerunterseite umfasst, aufsteht. Der Ring ist beispielsweise so ausgeführt, dass zwischen der Tellerunterseite und der inneren Halbschale 12 des Warmhalteunterteils ein geschlossenes, mit Luft gefülltes Volumen von der Höhe von beispielsweise 1 - 5 mm entsteht. Dieses Luftvolumen führt zu einer zusätzlich optimierten Wärmeübertragung zwischen dem Induktionskern 5 und den auf dem Teller angebrachten Speisen.

Das Warmhalteunterteil 1 ist bevorzugt mit einem entsprechenden über eine Fugenverbindung verbindbaren Warmhalteoberteil abdeckbar.

In Figur 2 bezieht sich das Bezugszeichen 7 auf ein dem Warmhalteunterteil 1 entsprechendes Warmhalteoberteil. Das Warmhalteoberteil 7 kann aus einer inneren Halbschale 72 und aus einer äusseren Halbschale 71 bestehen. Die beiden Halbschalen können aus einem PPO/PP-Blend Noryl oder PA 6-3-T der Dicke 1 - 3 mm bestehen. Der füllbare Zwischenraum zwischen der inneren Halbschale 72 und der äusseren Halbschale 71 kann mit einem Isolationsmaterial z.B. PU-Schaum ausgeschäumt sein. Die innere Halbschale 72 kann eine Tropfnase 30 zur Führung von Kondenswasser und zur Stabilisierung eines hochrandigen Tellers 2 umfassen. Die dem Teller zugewandte Innenseite des Warmhalteoberteils 50 der Halbschale 72 ist vorzugsweise zusätzlich mit einer metallischen Schicht, z.B. einer Cr-Stahl Schicht der Dicke von beispielsweise 20 - 100 µm, versehen.

An dieser Stelle sei erwähnt, dass der Abstand zwischen der Oberseite des Tellers und der Innenseite des Warmhalteoberteils vorteilhafterweise gemäss den in Figur 2 gezeigten relativen Geometrien gewählt wird.

Der Induktionskern kann auch durch die Verwendung von mehreren relativ dünnen Kernen von beispielsweise 0.2 - 2 mm Dicke, welche beidseitig eine Induktionsschicht, wie beispielsweise eine Chromstahl-Schicht, aufweisen, gebildet werden. Die Kerne können aus verschiedenen Materialien bestehen, beispielsweise aus einem hitzebeständigen Kunststoff. Dabei können mehrere solche Kunststoffkerne in einer Art Sandwichbauweise aufeinander gestapelt werden und so sowohl genügend Volumen für die kurzfristige Speicherung von Wärmeenergie in den Kernen, als auch genügend Volumen für die Einkoppelung von Wärmeenergie über die Induktionsschichten zur Verfügung gestellt werden. Eine solche Bauweise hat insbesondere Vorteile bei einer relativ gleichmässigen und schnellen Übertragung von Wärmeenergie in einen Kunststoffkern.

Die innere Halbschale 12 und die äussere Halbschale 11 des Warmhalteunterteils 1 können luftdicht verbunden sein. Die im Innenraum eingeschlossene Luft dehnt sich bei der Erwärmung allerdings wesentlich aus, sodass im Innenraum beispielsweise eine Verdoppelung des Drucks entstehen kann. Eine solche Erhöhung des Drucks kann vorzugsweise über eine Druckausgleichsöffnung von beispielsweise 0.2 - 1 mm Durchmesser im Boden des Warmhalteunterteils abgeführt werden. Allerdings entsteht dabei das Problem, dass beim Waschen des Warmhalteunterteils Wasser in den Innenraum eindringen kann, welches auch nach einem langen Trocknungsprozess nur sehr schwierig aus dem Innenraum abführbar ist. Um das Eindringen von Wasser vorzubeugen, kann die Druckausgleichsöffnung mit einem Membran-Patch respektive einer halbdurchlässigen Membran versehen sein, wobei der Membran-Patch für Luft durchlässig ist und für ausserhalb des Warmhalteunterteils anliegendes Wasser undurchlässig ist. Im Stand der Technik sind verschiedene Materialien mit dieser Eigenschaft bekannt. Ein solcher Membran-Patch kann beispielsweise auf der Innenseite der äusseren Halbschale 11 angebracht werden.

Die Stellfläche 20 des Warmhalteunterteils kann auch aus einem geschlossenen, an der Unterseite des Warmhalteunterteils angebrachten Ring bestehen.

### Erfindungsgemässes Verfahren

Das erfindungsgemässe Verfahren ist in Anspruch 4 definiert, und umfasst u.a. die folgenden Schritte:
- das endlose Förderband 103 wird bewegt,
- Tabletts 104 werden auf das endlose Förderband 103 gelegt,
- Geschirrelemente werden auf die Tabletts 104 gelegt,
- Speisen werden in den Geschirrelementen platziert,
wobei mindestens eines der Geschirrelemente einen Induktionskern umfasst oder über dem Induktionskern eines einen Induktionskern umfassenden Tabletts 104 oder Warmhalteunterteils 106 für Geschirrelemente liegt,
und wobei mindestens eine Induktionsspule 109a,109b,110a,110b, welche sich unter der durch das endlose Förderband 103 gebildeten Ebene befindet, mit Strom versorgt wird.

Die Versorgung der Induktionsspulen 109a, 109b, 110a, 110b kann kontinuerlich erfolgen. Das heisst, dass das Geschirrelement 105, das Warmhalteunterteil 106 oder das Tablett 104 jedesmal erwärmt werden, wenn sie über einer Induktionsspule 109a, 109b, 110a, 110b vorbeiführen.

Um Energie zu sparen, werden jedoch die Induktionsspulen 109a, 109b, 110a, 110b diskontinuerlich mit Strom versorgt. Die Stromversorgung erfolgt dann, wenn die Induktionsspulen 109a, 109b, 110a, 110b ein Signal von einer dazu vorgesehenen Steuereinheit empfängt.

In einer bervorzugten Ausführungsform hängt der Takt der Aufheizung des Geschirrelements 105, des Warmhalteunterteils 106 oder des Tabletts 104 von der Bewegungsgeschwindigkeit des Förderbandes 103 ab. Die Steuereinheit ist somit entsprechend manuell eingestellt.

Es kann auch vorgesehen sein, dass die Steuereinheit ein Rechenmodul umfasst, welches insbesondere mit Hilfe der Bewegungsgeschwindigkeit des Förderbandes 103 den genauen Zeitpunkt berechnet, an dem sich das Tablett 104, das Geschirrelement 105 oder das Warmhalteunterteil 106 in einer Erwärmungszone E1 oder E2 befindet, und die entsprechende Erwärmungszone E1 oder E2 zu diesem Zeitpunkt betätigt, d.h. die entsprechenden Induktionsspulen 109a, 110a oder 109b, 110b zu diesem Zeitpunkt mit Strom versorgt.

Die jeweiligen Erwärmungszonen E1, E2 werden nacheinander betätigt. Die Erwärmung eines Geschirrelements 105 oder Warmhalteunterteils 106 auf 150 bis 250°C dauert im Allgemeinen 10 bis 20 Sekunden und die Speisenverteilung beträgt im Allgemeinen 3 bis 20 Tabletts/Minute. Die Dauer der Erwärmung ist vorzugsweise in den Erwärmungszonen verteilt, d.h. 5-10 Sekunden für jede Erwärmungszone.

Je höher die Anzahl der Erwärmungszonen E1, E2,... ist, desto genauer wird die gewünschte Temperatur für die Warmhalteunterteile erzielt.

Am Anfang 107 des Förderbandes 103 werden die Temperaturen des Geschirrelements 105 und des Warmhalteunterteils 106 durch Infrarotmessaugen 111, 112 gemessen. Falls diese Temperaturen höher als ein bestimmter Wert, z.B. 50°C, sind, wird die Betätigung der Ewärmungszone entfallen.

Diese Temperaturmessungen können individuell durchgeführt und ihre Ergebnisse individuell von der Steuereinheit ausgewertet werden. Zum Beispiel, wenn der Temperatursensor 111 für das Warmhalteunterteil 106 eine Temperatur von 100°C misst, dann wird von der Steuereinheit bestimmt, dass die ganze Induktionsspulengruppe (109a, 109b) nicht versorgt werden muss, wenn sich das entsprechende Tablett darüber hinwegbewegt. Diese Messungen bzw. Bestimmungen werden jeweils für jedes Tablett bewerkstelligt. Dadurch wird verhindert, dass ein aus irgendeinem Grund schon erwärmtes Warmhalteunterteil ein zweites Mal erwärmt wird und eine übermässige Temperatur erreicht, die zur Verletzung einer Bedienperson oder zur Verbrennung der Speise führen könnte.

In einer weiteren Ausführungsform werden die Ewärmungszonen E1, E2 nur betätigt, wenn die Anwesenheit eines Tabletts oder eines Warmhalteunterteils in der entsprechenden Erwärmungszone, d.h. über den Induktionsspulen durch einen Anwesenheitsensor 113, 114, 115 oder 116 ermittelt wird. Somit werden das Geschirrelement 105, das Warmhalteunterteil 106 oder das Tablett 104 jeweils punktgenau über einer Erwärmungszone erwärmt.

In einer Variante befinden sich die Anwesenheitsensoren nicht innerhalb der jeweiligen Erwärmungszone, sondern gebenüber der Bewegungsrichtung des Förderbandes an einem etwas vorherliegenden Punkt (einige Millimeter) von dieser Erwärmungszone. Zufolge dieser Ausgestaltung kann die Punktgenauigkeit der Stromversorgung der Induktionsspulen erhöht werden.

## Patentansprüche

1. Speisenausgabeanlage mit einem endlosen Förderband (103), die unter der durch das endlose Förderband (103) gebildeten Ebene mit mindestens einer Induktionsspule (109a, 109b, 110a, 110b) für die Energieübertragung zu mindestens einem einen Induktionskern umfassenden Tablett (104), Geschirrelement (105) oder Warmhalteunterteil (106) für Geschirrelemente versehen ist, **dadurch gekennzeichnet, dass** sie mit Mitteln (111,112) zur Messung der Temperatur des einen Induktionskern umfassenden Geschirrelements (105) oder Warmhalteunterteils (106) für Geschirrelemente ausgerüstet ist.

2. Speisenausgabeanlage nach Anspruch 1, **dadurch gekennzeichnet, dass** sie mit Mitteln (113,114,115,116) zur Ermittlung der Anwesenheit eines Geschirrelements (105), Warmhalteunterteils (106) für Geschirrelemente oder Tabletts (104) über der Induktionsspule (109a, 109b, 110a, 110b) ausgerüstet ist.

3. Speisenausgabeanlage nach Anspruch 1 oder 2, **dadurch gekennzeichnet, dass** sie mit einer Steuereinheit zur Steuerung der Stromversorgung der Induktionsspule (109a, 109b, 110a, 110b) ausgerüstet ist.

4. Verfahren zur Ausgabe von angerichteten Speisen, bei dem:
- ein endloses Förderband (103) bewegt wird,
- Tabletts (104) auf das endlose Förderband (103) gelegt werden,
- Geschirrelemente auf die Tabletts (104) gestellt werden,
- Speisen in den Geschirrelementen platziert werden,
wobei mindestens eines der Geschirrelemente einen Induktionskern umfasst oder über dem Induktionskern eines einen Induktionskern umfassenden Tabletts (104) oder Warmhalteunterteils (106) für Geschirrelemente liegt, und mindestens eine Induktionsspule (109a, 109b, 110a, 110b), welche sich unter der durch das endlose Förderband (103) gebildeten Ebene befindet, mit Strom versorgt wird, gesteuert durch eine Steuereinheit, **dadurch gekennzeichnet, dass** die Steuereinheit Signale von Mitteln (111,112) zur Messung der Temperatur des den Induktionskern umfassenden Geschirrelements (105) oder Warmhalteunterteils (106) für Geschirrelemente auswertet.

5. Verfahren nach Anspruch 4, **dadurch gekennzeichnet, dass** die Induktionsspule (109a, 109b, 110a, 110b) kontinuierlich mit Strom versorgt wird.

6. Verfahren nach Anspruch 4, **dadurch gekennzeichnet, dass** die Induktionsspule (109a, 109b, 110a. 110b) diskontinuierlich mit Strom versorgt wird.

7. Verfahren nach Anspruch 6, **dadurch gekennzeichnet, dass** die Induktionsspule (109a, 109b, 110a, 110b) mit Strom versorgt wird, nur wenn sie ein Signal von der Steuereinheit empfängt.

8. Verfahren nach Anspruch 7 oder 8, **dadurch gekennzeichnet, dass** die Steuereinheit Signale von Mitteln (113,114,115,116) zur Ermittlung der Anwesenheit eines Geschirrelements (105), Warmhalteunterteils (106) oder Tabletts (104) über der Induktionsspule (109a, 109b, 110a, 110b) auswertet.

## Claims

1. System for dispensing food, with an endless conveyor belt (103), which system is provided under the plane formed by the endless conveyor belt (103) with at least one induction coil (109a,109b,110a,110b) for energy transmission to at least one tray (104), dinnerware element (105) or heat-retaining lower part (106) for dinnerware elements comprising an induction core, **characterised in that** it is equipped with means (111,112) for measuring the temperature of the dinnerware element (105) or heat-retaining lower part (106) for dinnerware elements comprising an induction core.

2. System for dispensing food according to claim 1, **characterised in that** it is equipped with means (113,114,115,116) of detecting the presence of a dinnerware element (105), heat-retaining lower part (106) for dinnerware elements or tray (104) over the induction coil (109a, 109b, 110a, 110b).

3. System for dispensing food according to claim 1 or 2, **characterised in that** it is equipped with a control unit for control of the power supply of the induction coil (109a, 109b, 110a, 110b).

4. Method of dispensing prepared food, in which:
- an endless conveyor belt (103) is moved,
- trays (104) are placed on the endless conveyor belt (103),
- dinnerware elements are put on the trays (104),
- food is placed in the dinnerware elements,
at least one of the dinnerware elements having an induction core or being situated over the induction core of a tray (104) or heat-retaining lower part (106) for dinnerware elements comprising an induction core, and at least one induction coil (109a ,109b, 110a, 110b), which is located under the plane formed by the endless conveyor belt (103), being supplied with electricity, controlled by a control unit, **characterised in that** the control unit evaluates signals from means (111, 112) for measuring the temperature of the dinnerware element (105) or heat-retaining lower part (106) for dinnerware elements comprising the induction core.

5. Method according to claim 4, **characterised in that** the induction coil (109a, 109b, 110a, 110b) is supplied with electricity continuously.

6. Method according to claim 4, **characterised in that** the induction coil (109a, 109b, 110a, 110b) is supplied with electricity intermittently.

7. Method according to claim 6, **characterised in that** the induction coil (109a,109b,110a,110b) is supplied with electricity only when it receives a signal from the control unit.

8. Method according to claim 7 or 8 <sic. 4 to 7>, **characterised in that** the control unit evaluates signals from means (113,114,115,116) for detecting the presence of a dinnerware element (105), heat-retaining lower part (106) or tray (104) over the induction coil (1 09a, 109b, 110a, 110b).

## Revendications

1. Installation de distribution de repas avec une bande de transport sans fin (103) qui est munie en-dessous du plan formé par la bande de transport sans fin (103) d'au moins une bobine à induction (109a, 109b, 110a, 110b) pour le transfert d'énergie à au moins un plateau (104), un élément de vaisselle (105) ou un chauffe-plat (106) comprenant un noyau d'induction pour des éléments de vaisselle, **caractérisée en ce qu'**elle est équipée de moyens (111, 112) pour la mesure de la température de l'élément de vaisselle (105) ou du chauffe-repas (106) pour éléments de vaisselle, comprenant un noyau d'induction.

2. Installation de distribution de repas selon la revendication 1, **caractérisée en ce que** qu'elle est munie de moyens (113, 114, 115, 116) pour détecter la présence d'un élément de vaisselle (105), d'un chauffe-repas (106) pour élément de vaisselle ou d'un plateau (104) au-dessus de la bobine à induction (109a, 109b, 110a, 110b).

3. Installation de distribution de repas selon la revendication 1 ou 2, **caractérisée en ce qu'**elle est munie d'une unité pour la commande de l'alimentation en courant de la bobine à induction (109a, 109b, 110a, 110b).

4. Procédé pour la distribution de repas cuisinés, où
- une bande de transport sans fin (103) est déplacée,
- des plateaux (104) sont placés sur la bande de transport sans fin (103)
- des éléments de vaisselle sont placés sur les plateaux (104),
- des repas sont placés dans les éléments de vaisselle,
au moins l'un des éléments de vaisselle comprenant un noyau d'induction qui se trouve au-dessus du noyau d'induction d'un plateau (104) ou chauffe-plats (106) pour élément de vaisselle et au moins une bobine à induction (109a, 109b, 110a, 110b) se trouvant en-dessous du plan formé par la bande de transport sans fin (103) est alimentée en courant commandé par une unité de commande, **caractérisée en ce que** l'unité de commande analyse des signaux provenant de moyens (111, 112) pour la mesure de la température de l'élément de vaisselle (105) ou chauffe-plats (106) pour des éléments de vaisselle comprenant le noyau d'induction.

5. Procédé selon la revendication 4, **caractérisé en ce que** la bobine à induction (109a, 109b, 110a, 110b) est alimentée en courant de manière continue.

6. Procédé selon la revendication 4, **caractérisé en ce que** la bobine à induction (109a, 109b, 110a, 110b) est alimentée en courant de manière discontinue.

7. Procédé selon la revendication 6, **caractérisé en ce que** la bobine à induction (109a, 109b, 110a, 110b) est alimentée en courant que si elle reçoit un signal de l'unité de commande.

8. Procédé selon la revendication 7 ou 8, **caractérisé en ce que** l'unité de commande analyse des signaux provenant de moyens (113, 114, 115, 116) pour la détection de la présence d'un élément de vaisselle (105), d'un chauffe-plats (106) ou d'un plateau (104) au-dessus de la bobine à induction (109a, 109b, 110a, 110b).
